# EUROPEAN PATENT SPECIFICATION

(11) **EP 4 560 746 B1**
(45) Date of publication and mention of the grant of the patent: **15.07.2026**
(21) Application number: 23020520.5
(22) Date of filing: 24.11.2023
(51) Int. Cl.: H01M 8/103, C25B 13/08, H01M 8/1072, H01M 8/18, C25B 1/04, H01M 8/10

(54) **METHOD FOR DOPING OF DENSE FILMS AND POROUS MEMBRANES BASED ON POLYBENZIMIDAZOLES WITH PROTON CONDUCTIVE ELECTROLYTOS BASED ON CONCENTRATED BRONSTED ACID/BENZIMIDAZOLE MIXTURES**
VERFAHREN ZUR DOTIERUNG VON DICHTEN FILMEN UND PORÖSEN MEMBRANEN AUF POLYBENZIMIDAZOLBASIS MIT PROTONENLEITENDEN ELEKTROLYTEN AUF BASIS VON KONZENTRIERTEN BRÖNSTED-SÄURE/BENZIMIDAZOL-MISCHUNGEN
PROCÉDÉ DE DOPAGE DE FILMS DENSES ET MEMBRANES POREUSES À BASE DE POLYBENZIMIDAZOLES À ÉLECTROLYTOS CONDUCTEUR PROTONIQUE

(43) Date of publication of application: 28.05.2025
(73) Proprietor: Institute of Polymers Bulgarian Academy of Sciences, 1113 Sofia (BG); Institute of Electrochemistry and Energy Systems at Bulgarian Academy of Sciences, 1113 Sofia (BG)
(72) Inventor: Penchev, Hristo Penchev, 5300 Gabrovo (BG); Ublekov, Filip Spasov, 4400 Pazardzhik (BG); Budurova, Desislava Stojanova, 1164 Sofia (BG); Borisov, Galin Rusev, 1336 Sofia (BG); Slavcheva, Evelina Pavlova, 1207 Sofia (BG)
(74) Representative: Varbanov, Julian Ivanov

(56) References cited:
- EP-A1- 4 167 328
- US-A1- 2008 241 627
- QING S ET AL: "Synthesis and characterization of thermally stable sulfonated polybenzimidazoles", EUROPEAN POLYMER JOURNAL, PERGAMON PRESS LTD OXFORD, GB, vol. 41, no. 7, 1 July 2005 (2005-07-01), pages 1589 - 1595, XP027696080, ISSN: 0014-3057, [retrieved on 20050701]

## Description

### TECHNICAL FIELD

The present invention relates to a method for doping dense films and porous membranes based on polybenzimidazoles (PBI's), with proton-conducting electrolytes based on concentrated Brønsted acid(s)/benzimidazole mixtures. The invention could find application in the field of hydrogen electrochemical converters - separating proton-conducting membranes in hydrogen fuel cells and water electrolyzers, redox flow batteries in electrochemical hybrid sulfur cycle etc.

### STATE OF THE ART

The prior art doped proton-conducting ion-solvating polymer electrolyte PBI based membranes are mechanically unstable when operating at higher temperatures (e.g. 160 °C) which in the case of phosphoric acid or PA-doped membranes is due to acid dehydration and the in situ resultant highly concentrated phosphoric acid and/or the occurrence of additional self-polycondensation of PA to polyphosphoric acid (PPA) which are both good solvents for the linear PBI matrix. It is also well-known from the practice that as the degree of PBI acid doping increases or there is increase in dopant acid concentration in the case of acid-water dopant mixtures specific concentration above a certain threshold, they act as good solvents for the pristine, chemically uncrosslinked polybenzimidazole matrix and this leads to an undesired excessive swelling or even complete dissolution of PBI membranes. In particular, such highly undesired over-swelling or dissolution occurs when attempting to dope PBI dense films or porous membranes directly with such concentrated Brønsted acids or their mixtures (e.g. concentrated sulfuric acid, methanesulfonic acid, anhydrous ortho-phosphoric acid, trifluoroacetic acid, etc.). This requires in practice the use most often of aqueous-acidic solutions with reduced solvating power acting simultaneously as a proton dopant and a polymer-swelling agent, but this is often associated with a significantly delayed doping time and in not rare cases with the need to apply an elevated temperature in order to achieve reasonable degree of doping/satisfying proton conductivity, especially when swelling dense films of polybenzimidazole in such solutions.

As the first study of PBI membranes doped with dilute sulfuric acid, the publication of B. Xing and O. Savadogo can be considered, in which it was shown that the proton conductivity of PBI membranes doped with sulfuric acid is higher, in compared to PBI membranes doped with phosphoric acid [B. Xing, O. Savadogo, J. N. Mater. Electrochem. Syst. 2, 95, 1999].

In the paper by Glipa et al. it is found that acid-doped PBI membranes could be switched to a highly conductive state by prolonged exposure (10-11 hours) in phosphoric acid and subsequent doping with sulfuric acid [X. Glipa, B. Bonnet, B. Mula, D. J. Jones, J. Roziere, J. Mater. Chem. , 9, 3045, 1999].

In an early study from 2000, Sawadogo et al. reported that membrane electrode stacks (MEAs) based on sulfuric acid-doped PBI and operating with a non-humidified H₂/O₂ gas mixture perform better in fuel cell mode compared to Nafion-117 based MEAs [O. Savadogo, B. Xing, J. N. Mater. Electrochem. Syst., 3, 343, 2000].

Then, there are few scientific publications concerning the development of PBI membranes doped with strong Brønsted acids such as sulfuric acid (SA) or methanesulfonic acid (MSA). One such study is the work of X. Wu and K. Scott, concerning the study of PBI membranes doped with concentrated acid-water solutions of sulfuric acid (up to 85 wt. % SA content) and their behavior in a high-temperature fuel cell regime [X. Wu, K. Scott, Fuel Cells, 12, 583-588, 2012], as well as the recent publication by Ikhsan et al. regarding the use of H₂SO₄ doped PBI membranes for redox vanadium flow batteries [Muhammad Mara Ikhsan, Saleem Abbas, Xuan Huy Do, Seung-Young Choi, Kobra Azizi, Hans Aage Hjuler, Jong Hyun Jang, Heung Yong Ha, Dirk Henkensmeier Chemical Engineering Journal, 435, 134902, 2022].

In a recent Korean patent from 2021 [KR20210135191A-2021-10-12] and the subsequent European patent application EP4167328A1 from 2022, the inventors disclose the preparation of dense and porous PBI membranes doped with up to 75 wt. % sulfuric acid/water mixture and the use of such proton-conductive membranes as effective separator in vanadium oxy-reduction flow batteries.

### DISCLOSURE OF THE INVENTION

To solve the above and other related problems, the present invention provides a novel method for effective doping of polybenzimidazole (PBI) films and porous membranes with a mixed electrolyte system based on concentrated Brønsted acid/benzimidazole additive mixtures, at a certain supercritical concentration of dissolved benzimidazole which prevents the PBI over swelling or dissolution to occur rather that performing effective doping and as such act as physically stabilizing agent. Alternatively, the Brønsted acid is optionally possible in the method according to the invention to be in a mixture with a Lewis acid, such as for example phosphorus pentoxide (P₂O₅).

The present invention is essentially based on the preparation of mixed proton-conducting electrolytes based on concentrated mineral and/or organic Brønsted acids with dissolved in them a low molecular weight heterocyclic additive from the group of benzimidazoles (such as the commercially available 1H-1,3-benzimidazole, 1-methyl benzimidazole, among other) and of effective doping with subsequent physical stabilization of polybenzimidazole (PBI)-based dense films or porous membranes (including composite membranes with incorporated inorganic particulate fillers) in order to obtain ion-solvating proton-conducting solid polymer electrolyte membranes therefrom.

In particular, the present invention relates to a method for the one-step doping of dense dry films and porous membranes of polybenzimidazoles and their composites containing various inorganic fillers with a novel proton-conducting electrolyte system comprising a mixture of concentrated Brønsted acid/s, optionally in a mixture with a Lewis acid and dissolved benzimidazole in the form of the corresponding acid salt, playing the role of a physically cross-linking PBI matrix additive and as a thermally stabilizing dopant additive. Also, the insertion of benzimidazole into the proton-donor electrolyte in the method according to the present invention surprisingly showed that it leads to an increase in the antioxidant capacity of the dopant and PBI solid polymer electrolytes doped with it, where part of the generated OH and other radicals formed during the operation of membrane electrolyte assemblies (MEAs) interact in a destructive manner with PBI macromolecules, the components of gas-difussion/catalyst layer, and competitively with the low-molecular benzimidazole salt acting as effective radical scavenger, which leads to delayed aging of PBI and a corresponding increase in the durability of operational MEAs.

In a preferred embodiment, the concentrated Brønsted acid is concentrated sulfuric acid.

In another preferred embodiment, Brønsted acid is a mixture of concentrated sulfuric acid and ortho-phosphoric acid.

In another preferred embodiment, the proton dopant is a mixture of Brønsted and Lewis acids, which mixture includes concentrated sulfuric acid and phosphorus pentoxide.

According to a further embodiment, the Brønsted acid is pure methanesulfonic acid or a mixture thereof with sulfuric or ortho-phosphoric acid.

According to a further embodiment, the Brønsted acid is pure trifluoroacetic acid or a mixture thereof with ortho-phosphoric acid.

In one variant of the method according to the present invention, the polybenzimidazole is selected from the group of m-PBI, p-PBI, O-PBI, , AB-PBI and others, as well as mixtures thereof.

In a preferred embodiment, the polybenzimidazole is meta- and para-polybenzimidazole.

In addition, the dense dry films and porous membranes of polybenzimidazoles and their composites may include various inorganic fillers selected, for example, from the group of montmorillonite, silica, activated carbon, graphene oxide, carbon nanotubes, etc.

The one-step doping method according to the present patent application in one embodiment proceeds by introducing a supercritical concentration of low molecular weight benzimidazole content into the mixed sulfuric acid electrolyte (e.g. 96%-98% sulfuric acid/benzimidazole, oleum (conc. H₂SO₄ x SO₃)/ benzimidazole, 96-98% sulfuric acid/orthophosphoric acid/benzimidazole, mixed solutions based on sulfuric acid/phosphorus pentoxide (H₂SO₄/P₂O₅), wherein, during doping in the temperature range 20-120°C, dissolution of the polybenzoimidazole matrix does not occur, but only its limited swelling, efficient doping with the mixed electrolyte and a high degree of in situ sulfonation of the polybenzimidazole main chain is also achieved.

It is essential to note that, as a rule, at a certain subthreshold concentrations of dissolved benzimidazole (for example, in the electrolyte composed of pure concentrated sulfuric acid, as well as mixed compositions including conc. H₂SO₄, H₃PO₄, methanesulfonic acid, trifluoroacetic acid and others), the dopant appears good solvent for the chemically uncrosslinked polybenzimidazole matrix, and for this reason practically usable solid polymer electrolyte membranes therefrom cannot be obtained.

On the other hand, doping with dilute aqueous solutions of sulfur or e.g. sulfuric/phosphoric acids with a concentration below 85 wt. % leads to relatively low doping levels and relatively low proton conductivity, strongly influenced by the relative humidity of the environment at high temperature operation in the fuel cell mode.

Another unfavorable property of aqueous-acidic solutions, for example, sulfuric acid with concentration below 93 wt.%, can be noted their progressive corrosive action, including on stainless steel made equipment, for example, the bipolar plates in hydrogen fuel cells and water electrolyzers.

Also, when polybenzimidazole films and membranes are doped with aqueous sulfuric acid solutions, synergism is observed in the proton conductivity of the membrane, but there is an unfavorable kinetic and thermodynamic hindrance in performing of effective in situ sulfonation of the polymer matrix. Here, as a result of the emerging intermolecular ionotropic interactions, an improvement of the physico-mechanical properties of the as obtained membrane is observed.

Anyone skilled in the art knows the existing technical difficulty of obtaining and the storage of concentrated/high molar aqueous sulfuric acid solutions with a concentration of sulfuric acid below 93 wt. %, which is on the one hand due to the highly exothermic nature of the water mixing reaction and the risk of shock boiling when using concentrated sulfuric acid or oleum as starting precursor and on the other hand the gradually increasing corrosive action/reduction of the passivating oxidizer effect on storage vessels when using concentrated sulfuric acid with a concentration below 93 wt. %.

In this regard, it has surprisingly been found that the mixed electrolyte systems involved in the doping method according to the present invention, with the addition of benzimidazole additive, exhibit a distinctly reduced corrosive and oxidative action and can be safely stored even in plastic containers.

The method for one-step doping of dense dry films and porous membranes based on polybenzimidazoles and their composites with a proton-conducting electrolyte according to the present invention generally includes:
a) production of a proton-conducting electrolyte, representing a mixed electrolyte of concentrated mineral or organic Brønsted acid by directly dissolving an aromatic heterocyclic compound from the group of benzimidazoles or its derivatives (preferably the cheap and commercially available 1H-1,3-benzimidazole) in a concentration interval 0.3-35 wt. % in which an acid-base reaction occurs with in situ formation of a corresponding benzimidazole salt or by dissolving an ex situ synthesized benzimidazole salt of the corresponding dopant acid;
b) providing a dense, dry film or porous membrane based on a polybenzimidazole matrix,
c) immersing and swelling a polybenzimidazole-based film or porous membrane of b) in a bath containing the mixed acid-salt electrolyte of a) in a temperature range of 20-120°C, for a residence time of at least 3 minutes up to one day, at which occurs effective doping of the material and obtaining an ion-solvating proton-conducting polybenzimidazole membrane;
d) conditioning of mixed-electrolyte-doped polybenzimidazole membranes in which equilibrium moisture absorption occurs.

More specifically, the one-step doping method according to the present patent application includes:
a) preparation of a mixed electrolyte from a concentrated mineral or organic Brønsted acid by directly dissolving an aromatic heterocyclic compound of the benzimidazole family (preferably the cheap and commercially available 1H-1,3-benzimidazole, abbreviated benzimidazole (BIm) or its derivatives) in a concentrated interval 0.3-35 wt. % depending on the acid used, in which an acid-base reaction occurs with in situ formation of the corresponding benzimidazole salt or by dissolving an ex situ synthesized benzimidazole salt of the corresponding dopant acid (e.g. benzimidazole hydrogen sulfate or benzimidazole mesylate salt);
a1) optionally, the preparation of a mixed electrolyte from a) is also carried out in the presence of a Lewis acid, such as, for example, hygroscopic phosphorus pentoxide, which is a precursor for the in situ preparation of phosphoric acid,
b) providing a dense, dry film or porous membrane based on a polybenzimidazole matrix,
c) immersing and swelling a polybenzimidazole-based film or porous membrane of b) in a bath containing the mixed acid-salt electrolyte of a) or a1), in the temperature range 20-120°C, over a wide time interval (from 3 minutes, with possibility of in-flow doping up to one day's stay), during which effective doping of the material occurs and obtaining an ion-solvating proton-conducting PBI membrane that does not flow when heated and maintains the necessary mechanical strength;
c1) in the cases of using a mixed electrolyte including mineral Brønsted acid, in particular 96-98% sulfuric acid, simultaneously with the doping, a highly efficient process of in situ sulfonation of the polybenzimidazole polymer matrix is carried out; a
c2) in the cases of using a mixed electrolyte based on an organic Brønsted acid and in a given case in the presence of a Lewis acid (e.g. methanesulfonic acid/ phosphorus pentoxide/benzimidazole) simultaneously with the doping, a highly efficient polycondensation synthesis of polybenzimidazoles takes place (e.g. synthesis of AB-PBI) and optionally
d) conditioning/water dilution of the mixed electrolyte doped polybenzimidazole membranes from c) to c2) in contact with air, where equilibrium air moisture absorption occurs.

Membranes obtained in accordance with the method, according to the present patent application, show a high degree of doping with concentrated mineral and organic acids, high proton conductivity and resistance to operation at elevated temperature.

### DESCRIPTION OF THE DRAWINGS

Fig. 1. Thermogravimetric and mass spectroscopic analysis of m-PBI doped with conc. H₂SO₄ and on a membrane of in situ sulfonated m-PBI doped with a H₂SO₄/benzimidazole mixed electrolyte system according to the present invention.
Fig. 2. FT-IR spectra of benzimidazole and benzimidazole hydrogen sulfate salt isolated after reaction with sulfuric acid.

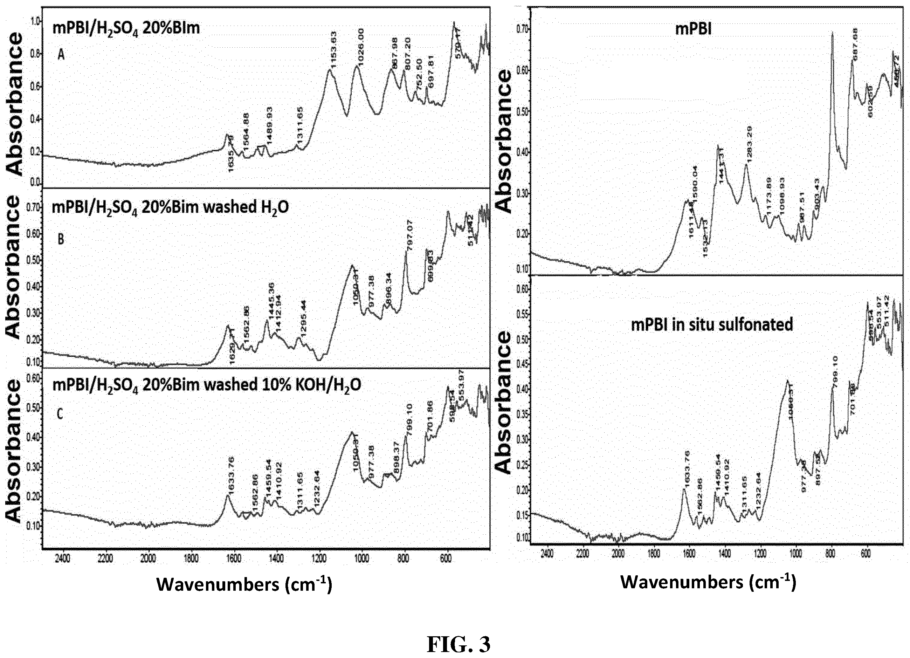

Fig. 3. FT-IR reflectance spectra of m-PBI film before and after doping and in situ sulfonation by the method according to the present patent application with the new H2SO4/benzimidazole mixed electrolyte system. IR-analysis, in which a prominent characteristic absorption at 1050 cm⁻¹ was observed for S=O asym. oscillations of the -SO₃H groups of the PBI membrane washed with deionized water, subsequently neutralized with a potassium base solution and again acidified with a salt-acid solution, which proves the sulfonation in the main chain of the polymer, with the method according to the invention.
Fig. 4. FT-IR reflectance spectra of meta-PBI film doped with methanesulfonic acid/benzimidazole 20% mixed electrolyte system (A).
Fig. 5. Photographic images of a doped dry film of m-PBI with a mixed electrolyte system of sulfuric acid/benzimidazole 20%, in which a characteristic darkening of the membrane is observed in the process of its doping and physical cross-linking.

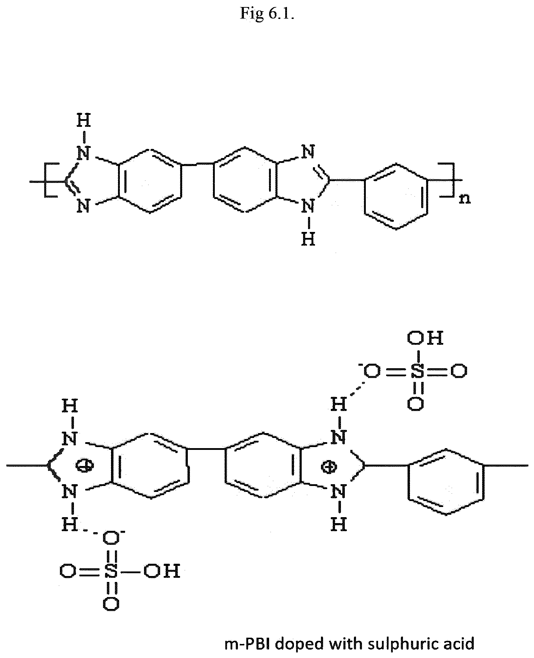

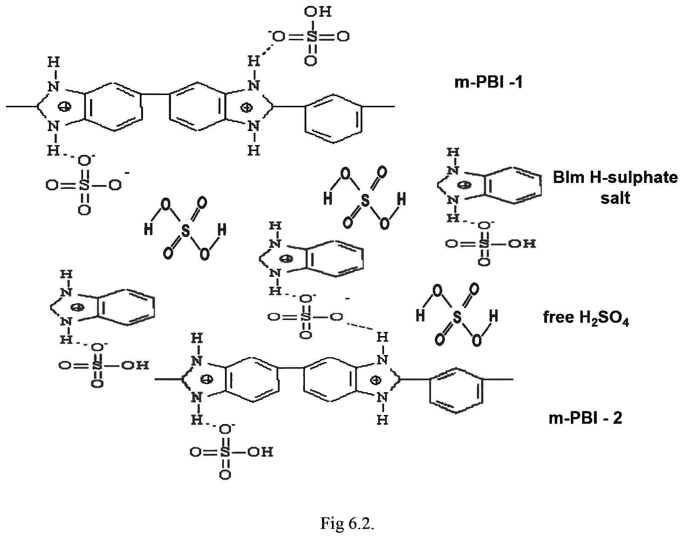

Fig. 6.1. and 6.2. respectively are a doping scheme of m-PBI with sulfuric acid and a scheme of doping and intermolecular interactions of m-PBI with a sulfuric acid/benzimidazole based mixed electrolyte.

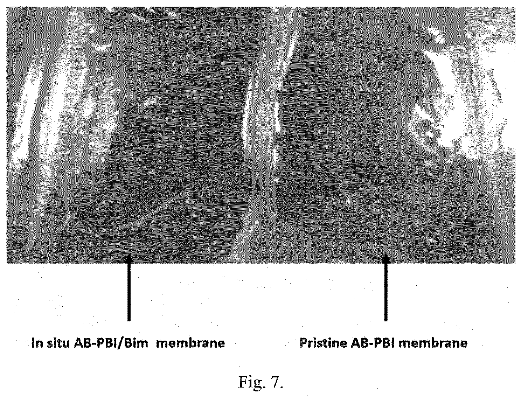

Fig.7 represents digital pictures of the as obtained inverse membranes from AB-PBI in situ doped with Bim (left). And pristine AB-PBI solution (right).

### EXAMPLES

Materials Used: Dry, dense films of meta-polybenzimidazole (m-PBI) were obtained using a commercially available solution of m-PBI in dimethylacetamide (S-26, PBI Performance, USA, inherent viscosity IV 0.7 dl/g, ), from which after drawing onto glass substrate using an automatic film applicator and subsequent evaporation of the solvent and separation from the substrate yielded films about 100 microns thick.

Porous films of meta- and para-polybenzimidazole (p-PBI) were obtained by immersing precast from dimethylacetamide or polyphosphoric acid based solutions, respectively, in a water bath where an inversion process was carried out. After extensive washing with deionized water, porous inverse membranes filled with water or lightly doped with dilute acidified solution are obtained. The dry content of polybenzimidazole in this type of membrane varies from 3 to 30 wt. %. The influence of the moisture content in the process of doping with the mixed electrolyte system can be neglected, given the large excess of dopant electrolyte and the subsequent possible preconditioning in contact with atmospheric moisture, due to the more or less pronounced hygroscopic character of the mixed electrolyte dopants of the present invention.

Alternatively, such membranes can be doped first with highly concentrated solutions of the corresponding pure acid (e.g. 85% phosphoric acid or 80% sulfuric acid, which are still a polymer gel dopant and not a polymer matrix solvent).

### PREFERRED EMBODIMENTS

I - Preparation of mixed proton-conducting electrolytes based on concentrated mineral and organic acids containing a salt dissolved benzimidazole additive:

### Example I-1. One-step preparation of 20 wt. % in situ prepared solution of benzimidazole hydrogen sulfate in concentrated sulfuric acid.

80 grams of concentrated sulfuric acid (98%, 79.9 mmol) are poured into a three-necked flask equipped with a magnetic stirrer, a thermometer and a reflux condenser and immersed in a crystallizer filled with the required level of cooling water bath. 20 grams of benzimidazole (C₇H₆N₂, M = 118.14 g.mol⁻¹, 5 wt.% moisture, 16 mmol) was added in four portions of 5 grams with vigorous stirring and cooling until complete dissolution of the resulting salt (the process is moderately exothermic) . The temperature of the solution was maintained at about 70°C in order to dissolve the benzimidazole faster, after which the solution was cooled to room temperature and stored in a hermetically sealed container. The molar ratio of sulfuric acid/benzimidazole in the resulting mixed electrolyte is 5:1 in favor of the acid.

### Example I-2. One-step preparation of 30 wt. % in situ solution of benzimidazole hydrogen sulfate in concentrated sulfuric acid.

Proceed as in Example I-1 with the dissolution of respectively 30 grams of benzimidazole in 70 grams of concentrated sulfuric acid. Sulfuric acid/benzimidazole mole ratio 2.9:1.

### Example I-3. One-step preparation of 20 wt. % in situ prepared solution of benzimidazole mesylate salt in 98% methanesulfonic acid

Proceed as in Example I-2 with sulfuric acid as in the case of dissolving benzimidazole in methanesulfonic acid, the reaction is less exothermic.

### Example I-4. One-step preparation of 20 wt. % in situ solution of benzimidazole hydrogen sulfate in a mixed solution of base conc. Sulfuric acid/10% by weight phosphorus pentoxide

The concentration of P₂O₅ dissolved in sulfuric acid can vary from 1 to 20 wt. %. In this case, phosphorus pentoxide plays a dual role - on the one hand, being a powerful dehydrating agent and Lewis acid, it supports the in situ sulfonation reaction of PBI at low and moderate temperature, and on the other hand, the excess of unreacted P₂O₅ in the doped membranes is hydrolyzed in situ in air , giving on complete hydrolysis resp. ortho-phosphoric acid as a co-dopant. The procedure for obtaining the mixed base conc. Sulfuric acid/P₂O₅ with a concentration of 10 wt. % includes the following: in a three-necked flask fitted with an "anchor" type magnetic stirrer to 180 grams of conc. sulfuric acid, 20 grams of freshly weighed P₂O₅ powder, if possible in a headbox, are added at once. The mixture was stirred vigorously for 1 hour at room temperature, during which almost complete dissolution of the phosphorus pentoxide occurred. To dissolve the remaining undissolved amount, the mixture was heated with stirring at 70°C for another hour until a clear, homogeneous solution was obtained. To this solution is then added at room temperature the appropriate amount of benzimidazole and the mixture is stirred until the benzimidazole is completely dissolved in a concentration of 20 wt. %. The solution thus prepared is ready for use as a doping and sulfonating PBI agent.

### Example I-5. One-stage preparation of 20 wt. % in situ solution of benzimidazole hydrogen sulfate in a mixed solution based on methanesulfonic acid/10 wt.% phosphorus pentoxide.

The concentration of P₂O₅ dissolved in methanesulfonic acid can vary from 1 to 15 wt. %, preferably 7-10 wt.%. In the technique, a 7% solution of P₂O₅ in methanesulfonic acid is called Eton's reagent and is used as a reaction medium with a powerful dehydrating action in carrying out condensation and polycondensation reactions, e.g. in the synthesis of AB-PBI from 3,4 diaminobenzoic acid as a single monomer. The procedure for dissolving phosphorus pentoxide in methanesulfonic acid is identical to that of Example I-4, except that in this case heating at 110°C for 2 hours is required. The resulting solution is stored at a temperature of 40-50°C. The dissolution of benzimidazole in a concentration of 20 wt. % is carried out identically to Example I-3, but here, in order to accelerate the dissolution of the benzimidazole, it is desirable to heat the mixture moderately to 60°C until complete dissolution occurs and a clear solution is obtained.

### Example I-6. One-step preparation of 20 wt. % in situ obtained solution of benzimidazole mesylate salt in 98% methanesulfonic acid (M = 96.11 g.mol⁻¹, density 1.48 g.cm ⁻³)

The process is carried out as in Example I-5 with sulfuric acid as in the case of dissolving benzimidazole in methanesulfonic acid, the reaction is less exothermic. A clear, slightly hygroscopic solution is obtained. Methanesulfonic acid/benzimidazole molar ratio 2.8:1.

### Example I-7. One-step preparation of a mixed electrolyte based on 85% ortho-phosphoric acid (15% water content), with dissolved 10 wt. % benzimidazole.

In this case, due to the less acidic nature of orthophosphoric acid and its tribasicity, the dissolution of benzimidazole requires heating and prolonged stirring of the mixture. Pre-weighed 720 grams of 85% ortho-phosphoric acid (density 1.71 g.cm⁻³) are added to a small glass reactor with a volume of 1000 cm3, equipped with a heating mantle and a mechanical stirrer. With intensive stirring, 80 grams of benzimidazole are added at once. The mixture was heated to 100°C and stirred for 4 hours until the benzimidazole was completely dissolved.

### Example I-8. One-stage preparation of a mixed electrolyte based on pure ortho-phosphoric acid, with dissolved 10 wt. % benzimidazole.

For this purpose, commercial ortho-phosphoric acid with a purity of 98-99% (M = 97.99 g.mol⁻¹, density 1.68 g.cm⁻³) can be used or the same can be obtained on site by adding and dissolving the necessary stoichiometric amount phosphorus pentoxide to a ready solution of 85% phosphoric acid, whereby the water present in the solution hydrolyzes the phosphorus pentoxide to pure ortho-phosphoric acid and concentration of the dilute acid occurs. In this case, the addition and dissolution of the benzimidazole to form a mixed electrolyte was identical to that described in Example I-7, with the benzimidazole dissolution time corresponding to about 8 hours. The final product of dissolution and interaction with phosphoric acid is an acid salt - benzimidazole dihydrogen phosphate. The molar ratio of phosphoric acid/benzimidazole in the resulting mixed electrolyte is 5:1.

### Example I-9. One-step preparation of a mixed electrolyte based on trifluoroacetic acid with dissolved 15 wt. % benzimidazole.

15 grams of benzimidazole are first poured into a three-necked flask equipped with a reflux condenser. Then, pre-weighed 85 grams of anhydrous trifluoroacetic acid (99%, M - 114.02 g.mol-1, density 1.49 g.cm⁻³) are added all at once. Stir with a magnetic stirrer. The dissolution of benzimidazole in this case occurs very quickly within a few minutes. Molar ratio trifluoroacetic acid: benzimidazole 5.7: 1.

### Example I-10. Two-stage preparation of 20 wt. % concentrated sulfuric acid based mixed electrolyte solution using ex situ synthesized benzimidazole hydrogen sulfate

In this synthetic approach, in order to reduce the exothermic nature of the in situ dissolution of the benzimidazole base in concentrated sulfuric acid, the acidic benzimidazole sulfate salt is prepared and isolated beforehand by a conventional stoichiometric neutralization process using dilute aqueous solutions of equimolar sulfuric acid (concentration 5 - 30 wt. %). When benzimidazole is mixed and neutralized with a dilute aqueous solution of acid, the well-soluble salt - benzimidazole hydrogen sulfate is obtained, which is then isolated in the form of a white crystalline substance by the known methods of evaporation and crystallization. The isolated hydrogen sulfate salt of benzimidazole is excellently soluble in concentrated sulfuric acid, the solvation and dissolution reaction being less exothermic than direct dissolution and allowing some acceleration of the process. A disadvantage of this method of dissolving ready-made salt is the labor-intensive and energy-intensive processes of evaporation and drying from dilute aqueous solutions. Another disadvantage is the increased hygroscopicity of the isolated hydrogen sulfate salt of benzimidazole, compared to the hydrophobic base.

### Example I-11. Two-stage preparation of 20 wt. % concentrated sulfuric acid based mixed electrolyte solution using ex situ synthesized benzimidazole hydrogen sulfate

In this synthetic approach, a previously synthesized and isolated crystalline acid hydrogensulfate salt of benzimidazole is used. Two synthetic approaches are possible for the preparation and isolation of the salt.
Approach A: the acidic benzimidazole sulfate salt is prepared and isolated in advance using wet synthesis by a conventional stoichiometric neutralization process using dilute aqueous solutions of equimolar sulfuric acid (concentration 5 - 30 wt %) to which the appropriate amount of benzimidazole is added until its complete dissolution and obtaining a clear, homogeneous aqueous solution with the corresponding concentration of dissolved salt. When benzimidazole is mixed and neutralized with a dilute aqueous solution of acid, the well-soluble salt - benzimidazole hydrogen sulfate is obtained, which is then isolated in the form of a white crystalline substance by the known methods of vacuum evaporation and crystallization. The isolated hydrogen sulfate salt of benzimidazole is excellently soluble in concentrated sulfuric acid, the solvation and dissolution reaction being less exothermic than the direct dissolution of basic benzimidazole and allowing some additional acceleration of the dopant mixture preparation process. A disadvantage of this method of synthesis of ready-made salt is the time-consuming and energy-intensive processes of evaporation and drying from dilute aqueous solutions. Another disadvantage is the increased hygroscopicity of the isolated hydrogen sulfate salt of benzimidazole, compared to the hydrophobic base.
Approach B: Solid-phase synthesis by direct neutralization of powdered benzimidazole using concentrated sulfuric acid with a concentration of 96-98%. The solid-phase synthesis is carried out by the one-step addition of concentrated acid to benzimidazole while stirring in a mortar with a pestle or in a ball mill. The reaction is instant and moderately exothermic. After cooling the mixture, a white powder crystalline mass of the acid hydrogen sulfate salt of benzimidazole was obtained in quantitative yield.
These two approaches can also be used to prepare other acid salts of benzimidazoles with the participation of concentrated Brønsted acids in equimolar neutralization ratios such as e.g. the mentioned methanesulfonic, trifluoromethanesulfonic, trifluoroacetic acids, etc.

### II. Doping of polybenzimidazole dry films and mixed electrolyte porous membranes:

### Example II-1. Doping a thick dry film of meta-polybenzimidazole with 20 wt. % benzimidazole/conc. H₂SO₄ at room temperature

A dry film of meta-polybenzimidazole is cut into 10x10 cm square-shaped pieces, each of which is pre-weighed. The pieces are immersed and moistened carefully in a vessel, a doping bath, containing 300 ml of mixed electrolyte 20 wt. % benzimidazole/conc.H₂SO₄. The films begin to swell almost instantaneously, reaching an equilibrium degree of swelling within 10 minutes of being in the bath at room temperature. A slightly pronounced darkening of the films was observed with longer exposure. The reached equilibrium degree of swelling α α_{observed.} = 220 %.

### Example II-2. Doping a thick dry film of meta-polybenzimidazole with 20 wt. % Bim/conc.H₂SO₄ at 100°C

A dry meta-PBI film/foil is cut into square-shaped pieces of 10x10 cm dimensions, each of which is pre-weighed. The pieces are immersed and moistened carefully in a vessel, a doping bath, containing 300 ml of mixed electrolyte 20 wt. % Bim/conc.H₂SO₄. The films are initially swollen to an equilibrium degree of swelling at room temperature, after which the temperature of the dopant bath is raised to 100°C. The membranes are left in the thus heated dopant medium for a period of 1 hour to 24 hours. A marked darkening of the films was observed on standing. The reached equilibrium degree of swelling αnab. = 260%. During the swelling process, highly efficient in situ sulfonation of the polybenzimidazole macromolecules takes place in the mixed electrolyte.

### Example II-3. Doping a porous para-PBI membrane with 20 wt. % Bim/conc.H₂SO₄ at 100°C.

A porous membrane based on para-PBI is obtained by methods known in the art such as e.g. the BASF patented sol-gel method using about 3% solution of in situ synthesized para-PBI in polyphosphoric acid (PPA). When a viscous solution of para-PBI from PPA heated at 200°C is poured with a doctor's knife with a gap of 0.6 mm on a glass substrate and left for one day at room temperature in contact with atmospheric moisture, a porous gel-electrolyte membrane is obtained, one-step doped with phosphoric acid. In order to remove the phosphoric acid and replace and by pre-doping with a mixed electrolyte based on 20 wt. % Bim/conc.H₂SO₄, the pristine sol-gel membrane was first immersed and washed in a water bath until most of the free phosphoric acid was washed away and further gel inversion of PBI was performed. In order to completely remove the phosphoric acid ionically bound to PBI, the inverse membrane was successively treated with 5% ammonia water and finally allowed to stand for one day in deionized water. The thus obtained PBI porous inverse membrane was treated by direct immersion in a dopant bath with a large excess of mixed electrolyte of 20 wt. % Bim/conc.H₂SO₄, after which the temperature was raised to 100°C for 3 h reaction time in order to perform additional in situ sulfonation of the polymer matrix.

### Example II-4 Doping of a porous membrane based on meta-PBI with 20 wt. % Bim/conc.H₂SO₄ at 100°C.

In this case, an inverse PBI microporous membrane was prepared by casting a ready-made commercial solution of meta-PBI (PBI S-26) with a polymer concentration of 26 wt. %. In this case, m-PBI-was solubilized in a dimethylacetamide/LiCl based solvent system. In order to vary the porosity of this type of membrane, the polymer concentration can be varied by dilution with pure dimethylacetamide in the range of 7-23 wt.% or by controlled evaporation of a portion of the solvent in the native cast membrane under moderate heating and humidity control. The thickness of the membrane can be varied by varying the gap of the pouring knife over a wide range from 50 to 800 microns. The inversion of the natively cast membrane is carried out by immersion in a precipitation bath of deionized water heated to 80°C and prolonged residence within several hours. For further purification of residual dimethylacetamide, inverse membranes can be extracted with 96% ethanol and subsequently preconditioned in pure water. The thus obtained porous membranes of m-PBI filled with water (dry content between 10 and 35 wt %) were then treated in a dopant bath containing a volume excess of mixed electrolyte based on 20 wt . % Bim/conc.H₂SO₄ by similarity to the above-described examples of doping PBI thick films.

### Example II-5 Synthesis of polybenzimidazoles in a mixed electrolyte based on methanesulfonic acid/phosphorus pentoxide/benzimidazole.

In a three-necked flask of 200 cm³ , equipped with a reflux condenser and purged with inert gas argon, is first added 93g. of previously obtained according to the procedure described in Example I-4 mixed electrolyte based on methanesulfonic acid/10 wt. % P₂O₅ containing 10 wt. % benzimidazole. In the cold, 7g of recrystallization-purified 3,4-diaminobenzoic acid as a precursor for the synthesis of AB-PBI were added to the solution and the mixture was stirred intensively. The temperature of the mixture was then gradually raised to 120°C for 1 hour under vigorous argon purging until the monomer was completely dissolved. The temperature rises to 140°C, at which point polycondensation of the monomer begins and the viscosity of the solution gradually increases. The polycondensation reaction was carried out under these conditions for 48 h, yielding a yellowish-colored viscous solution of AB-PBI suitable for casting membranes. From the obtained solution, after pouring with a doctor's knife on a glass substrate, cooling the polymer solution and 24 hours of sol-gel transition in contact with atmospheric moisture, a membrane of AB-PBI in situ doped with a mixed electrolyte based on methane sulfonic/phosphoric acids/benzimidazole is obtained.

### III. Determination of the critical concentration of a mixed electrolyte

### Example III-1. Determination of the critical concentration of mixed electrolyte, at which excessive swelling occurs (loss of mechanical properties of the resulting gel-electrolyte membrane) or complete dissolution of the polymer matrix occurs.

For this purpose, for each type of concentrated Brønsted acid, a series of prepared mixed electrolytes with decreasing concentration of dissolved benzimidazole was tested and the doping behavior of dense films and of porous membranes of meta-PBI was followed - the degree of swelling of the films, the change in the physico-mechanical indicators, expressed as their deterioration with the excessive increase in the degree of swelling and the occurrence of complete dissolution of the PBI test samples in contact with a mixed electrolyte with a subcritical concentration of dissolved benzimidazole.

The results of dry film swelling testing of meta-PBI in mixed sulfuric acid and methanesulfonic acid/benzimidazole based electrolytes are summarized in Table 1:

**Table 1**

| Type of acid in the mixed electrolyte | Benzimidazole content, wt.% | Equilibrium degree of swelling, %, 20°C | Equilibrium degree of swelling, %, 100°C |
|---|---|---|---|
| 98% sulfuric acid | 20 | 220 | 260 |
| | 15 | 610 | Dissolves |
| | 10 | Dissolves | Dissolves |
| 99% methanesulfonic acid | 20 | 240 | 290 |
| | 15 | 530 | Dissolves |
| | 10 | Dissolves | Dissolves |
| 100% phosphoric acid | 10 | 110 | 200 |
| | 5 | 140 | 260 |
| | 1 | 160 | Dissolves |

### Analysis results

### 1. Thermogravimetric, mass spectroscopic and FT-IR analyses.

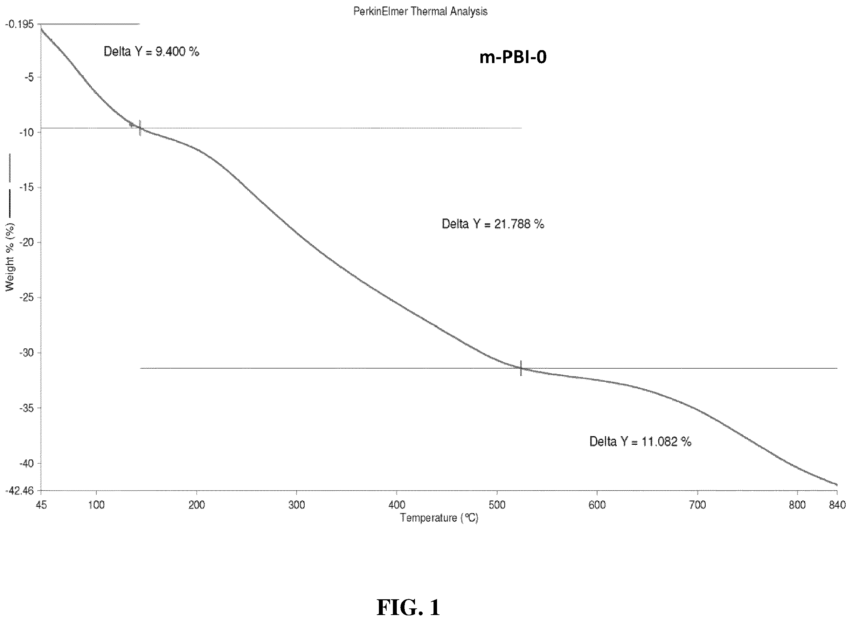

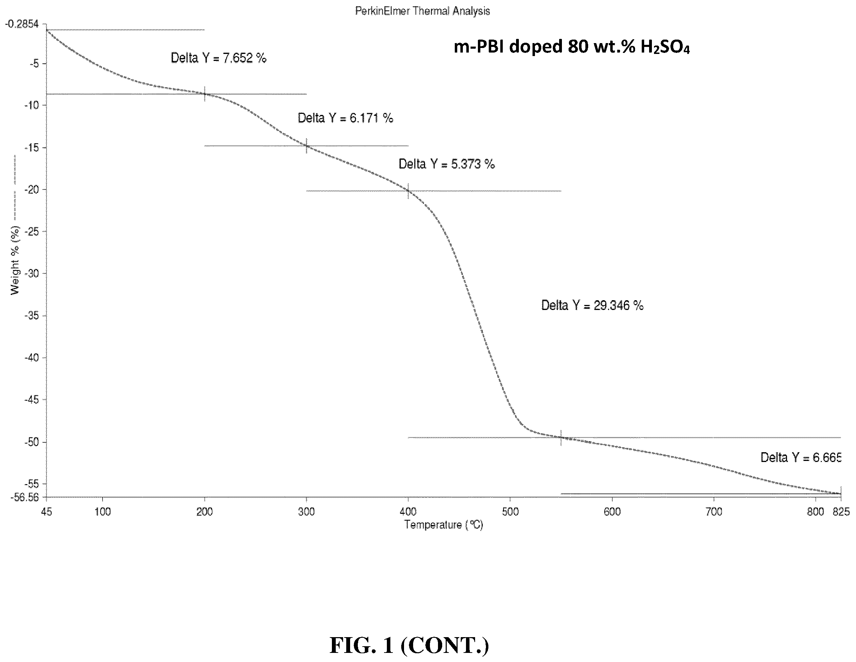

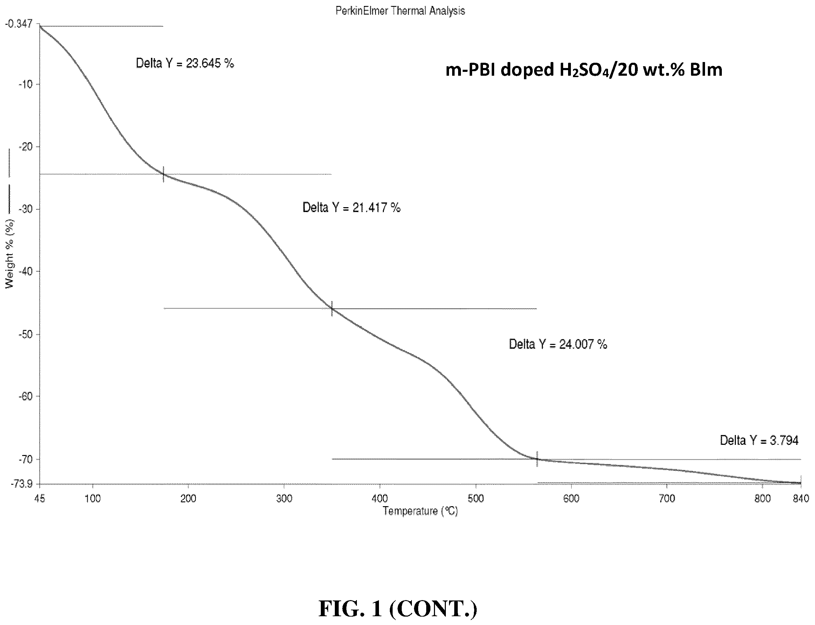

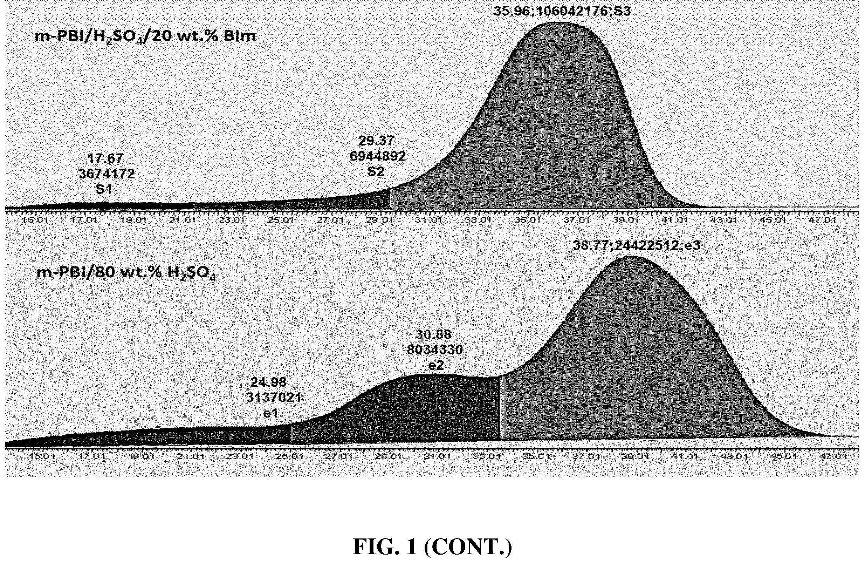

It was found, on the one hand, stabilization of ortho-phosphoric acid against the occurrence of high-temperature polycondensation (heating above 160°C) and, on the other hand, TGA and mass spectroscopic analysis of the doped membranes established the high thermal stability of the new membranes and significant inhibition of the thermal decomposition reaction of conc.. Sulfuric acid with release of sulfur di-/trioxides occurring strongly when heating the doped PBI membranes with ppristine concnentrated sulfuric acid without Bim additive above 120°C (Fig. 1).

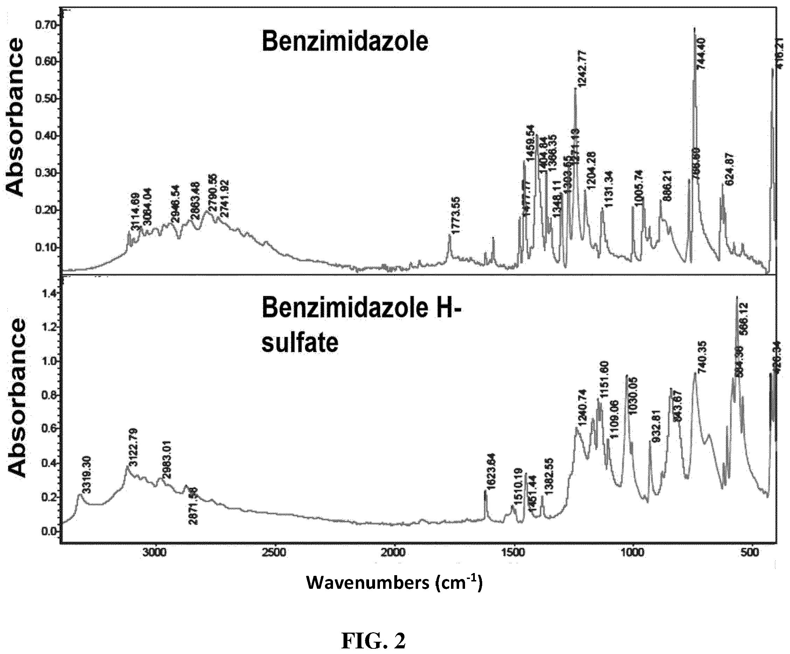

Thermogravimetric analysis of the doped PBI membranes showed excellent thermochemical stability with only approx. 7.6% weight loss up to 200 °C and an additional 6.1% loss when heated up to 300 °C, which is an excellent result and shows a very high physico-chemical resistance of the obtained new solid polymer-electrolyte. One possible explanation is the in situ sulfonation of the matrix by PBI as well as the formation of additional sulfone bridges crosslinking the polymer chains, and also specific interactions with the electrolyte system containing the acidic hydrogen sulfate salt of benzimidazole, proven by FT-IR analysis (Fig. 2).

This result can be defined as very encouraging in view of the existing restrictions in the use of sulfuric acid as an electrolyte in PBI-based membranes. Another great advantage of the invented new mixed electrolyte system, at a well-defined critical composition, is a property to chemically stabilize the PBI matrix, leading to its physical cross-linking and also to the occurrence of effective in situ sulfonation of the PBI matrix during its doping, apparently from the performed IR-analysis, in which a pronounced characteristic absorption at 1050 cm-1 was observed for S=O asym. vibrations from the covalently bound -SO₃H groups of the deion. water, neutralized with a potassium base solution, aiming to remove the non-covalently bound sulfate and hydrogen sulfate ions and again acidified with a salt-acid solution PBI membrane, which proves that in situ sulfonation has taken place in the main chain of the polymer (Fig.3).

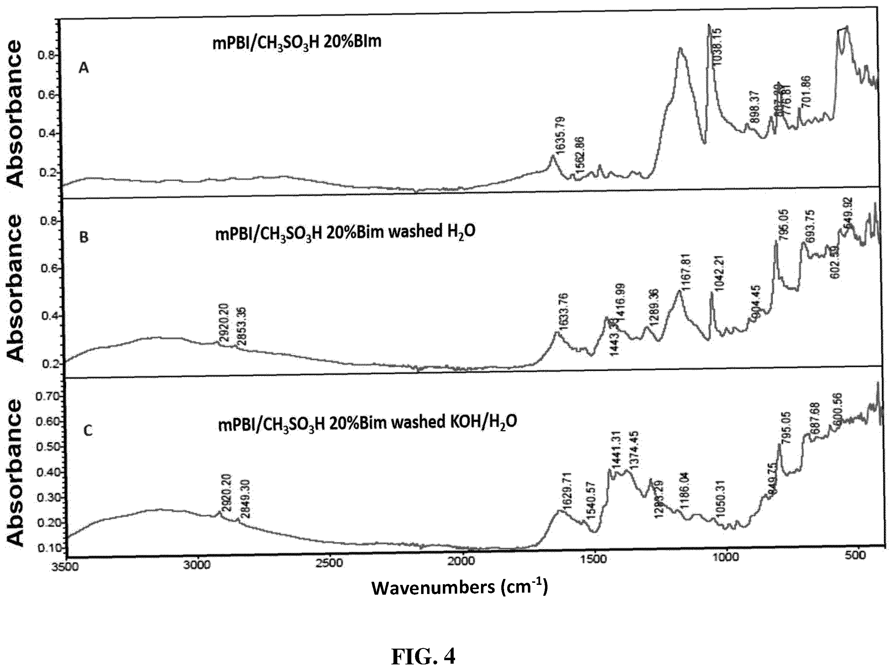

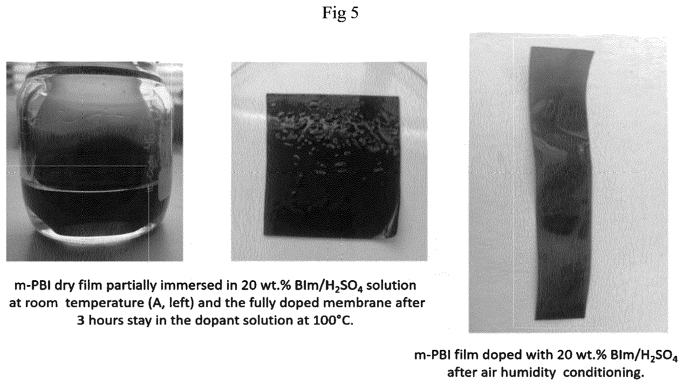

Furthermore, in Fig. 4. FT-IR reflectance spectra of meta-PBI film doped with methanesulfonic acid/benzimidazole 20% mixed electrolyte system (A). The film after washing the electrolyte with water (B) and after staying in a 10% solution of potassium base (C). In this case, the characteristic change in the color of the membrane, its darkening, is not observed, as in the case of doping and with a mixed electrolyte based on conc. sulfuric acid and the proven in situ sulfonation (Fig. 5). The reason for this is that methanesulfonic acid, as a weaker organic acid, itself does not have the property of covalently binding to PBI macromolecules.

### 2. Proton conduction

The measured impedance proton conductivity of different PBI membranes doped with mixed acid electrolytes with different dissolved benzimidazole contents are summarized in Table 2. Increasing the dissolved benzimidazole content in the mixed acid electrolyte decreases the amount of free acid in the electrolyte and hence the total proton conductivity of the dopant solution decreases, but in this case the strength of the Brønsted acid used (super acid, strong or medium acid) must also be taken into account, as well as its basicity/polyvalency. As can be seen from the results, the proton conductivity varies widely depending on the strength of the Brønsted acid used, the content of dissolved benzimidazole. There is also a distinct trend for a significant increase in conductivity with increasing temperature and humidity for membranes doped with sulfuric acid and methanesulfonic acid, reaching very high values of 700 mS.cm⁻¹.

**Table 2. Proton conductivity of PBI membranes doped with mixed acid electrolytes containing benzimidazole.**

| Doped membrane | T, [°C] | Proton conduction, [mS.cm⁻¹] | |
|---|---|---|---|
| | | RH = 10% | RH = 30% |
| m-PBI/H₂SO₄/BIm20% | 60 | 125 | 230 |
| m-PBI/H₂SO₄/BIm 20% | 120 | 340 | 610 |
| m-PBI/ H₂SO₄/BIm 30% | 60 | 74 | 110 |
| m-PBI/H₂SO₄/BIm 30% | 120 | 205 | 330 |
| m-PBI/CH₃SO₃H/BIm20% | 60 | 170 | 210 |
| m-PBI/CH₃SO₃H/BIm20% | 90 | 290 | 350 |
| m-PBI/H₃PO₄/BIm 10% | 60 | 70 | 45 |
| m-PBI/H₃PO₄/BIm 10% | 140 | 110 | 135 |
| p-PBI/H₂SO₄/BIm 20% | 60 | 140 | 280 |
| p-PBI/H₂SO₄/BIm 20% | 120 | 390 | 700 |

The above results clearly show that with the method of doping meta- and para-PBI based membranes with the new electrolyte system based on concentrated sulfuric acid according to the present patent application, stable membranes with high proton conductivity and thermal stability are obtained.

## Claims

1. Method for efficient doping of dense dry films and porous membranes based on polybenzimidazoles and their composites with a proton-conducting electrolyte, **characterized in that** it includes:
a) obtaining a proton-conducting electrolyte, representing a mixed electrolyte of concentrated mineral or organic Brønsted acid by directly dissolving an aromatic heterocyclic compound from the group of benzimidazoles or its derivatives in a concentration range of 0.3-35 wt. % in which an acid-base reaction occurs with in situ formation of a corresponding benzimidazole salt or by dissolving an ex situ synthesized benzimidazole salt of the corresponding dopant acid;
b) providing a dense, dry film, porous membrane or composite thereof based on a polybenzimidazole matrix,
c) immersing and swelling a polybenzimidazole-based film, porous membrane or composite thereof of b) in a bath containing the mixed acid-salt electrolyte of a) in a temperature range of 20-120°C, for a residence time of at least 3 minutes to one day during which doping of the material occurs and obtaining an ion-solvating proton-conducting polybenzimidazole membrane; and
d) conditioning of mixed-electrolyte-doped polybenzimidazole membranes in which equilibrium moisture absorption occurs.

2. Method according to claim 1, **characterized in that** the benzimidazole is 1H-1,3-benzimidazole or 1-methyl benzimidazole.

3. The method according to claim 1 or 2, **characterized in that** the proton-conducting electrolyte comprises one of the following: concentrated sulfuric acid, a mixture of concentrated sulfuric acid and ortho-phosphoric acid.

4. The method according to the preceding claim, **characterized in that** simultaneously with c) a process of in situ sulfonation of the polybenzimidazole polymer matrix takes place.

5. The method according to claim 1, **characterized in that** the proton-conducting electrolyte is a mixture of a mineral or organic Brønsted acid and a benzimidazole hydrogen sulfate salt obtained by solid-phase synthesis with direct neutralization of benzimidazole with concentrated sulfuric acid.

6. The method according to claim 1 or 2, **characterized in that** the proton-conducting electrolyte comprises one of the following: pure methanesulfonic acid, trifluoroacetic acid or mixtures thereof with ortho-phosphoric acid.

7. The method according to the preceding claim, **characterized in that** the proton-conducting electrolyte is a mixture of concentrated sulfuric acid and pure methanesulfonic acid, wherein a process of in situ sulfonation of the polybenzimidazole polymer matrix takes place simultaneously with c).

8. The method according to the preceding claims, **characterized in that** the proton-conducting electrolyte further comprises a Lewis acid such as phosphorus pentoxide.

9. The method according to the preceding claim, **characterized in that** the proton-conducting electrolyte is a mixture of methanesulfonic acid, phosphorus pentoxide and benzimidazole, wherein c) is preceded by a polycondensation synthesis of polybenzimidazole.

10. The method according to the preceding claims, **characterized in that** the dense dry films and porous membranes of benzimidazoles and their composites include inorganic fillers selected from the group of montmorillonite, silica, activated carbon, graphene oxide, carbon nanotubes.

## Patentansprüche

1. Verfahren zum effizienten Dotieren dichter trockener Filme und poröser Membranen auf Basis von Polybenzimidazolen und deren Verbundstoffen mit einem protonenleitenden Elektrolyten, **dadurch gekennzeichnet, dass** es umfasst:
a) Bereitstellung eines protonenleitenden Elektrolyten, der einen gemischten Elektrolyten aus einer konzentrierten mineralischen oder organischen Brønsted-Säure darstellt, durch direktes Lösen einer aromatischen heterocyclischen Verbindung aus der Gruppe der Benzimidazole oder deren Derivate in einem Konzentrationsbereich von 0,3-35 Gew.-%, wobei eine Säure-Base-Reaktion mit in-situ-Bildung eines entsprechenden Benzimidazolsalzes erfolgt, oder durch Lösen eines ex situ synthetisierten Benzimidazolsalzes der entsprechenden Dotierungssäure;
b) Bereitstellung eines dichten trockenen Films, einer porösen Membran oder eines entsprechenden Verbundstoffs auf Basis einer Polybenzimidazolmatrix;
c) Eintauchen und Quellen eines auf Polybenzimidazol basierenden Films, einer porösen Membran oder eines entsprechenden Verbundstoffs gemäß b) in ein Bad, das den gemischten Säure-Salz-Elektrolyten gemäß a) enthält, in einem Temperaturbereich von 20-120 °C, für eine Verweilzeit von mindestens 3 Minuten bis zu einem Tag, während der die Dotierung des Materials erfolgt und eine ionensolvatisierende, protonenleitende Polybenzimidazolmembran erhalten wird; und
d) Konditionierung der mit gemischtem Elektrolyten dotierten Polybenzimidazolmembranen, bei der eine Gleichgewichtsfeuchtigkeitsaufnahme erfolgt.

2. Verfahren nach Anspruch 1, **dadurch gekennzeichnet, dass** das Benzimidazol 1H-1,3-Benzimidazol oder 1-Methylbenzimidazol ist.

3. Verfahren nach Anspruch 1 oder 2, **dadurch gekennzeichnet, dass** der protonenleitende Elektrolyt eines der folgenden umfasst: konzentrierte Schwefelsäure, ein Gemisch aus konzentrierter Schwefelsäure und Orthophosphorsäure.

4. Verfahren nach dem vorhergehenden Anspruch, **dadurch gekennzeichnet, dass** gleichzeitig mit c) ein Prozess der in-situ-Sulfonierung der Polybenzimidazol-Polymermatrix stattfindet.

5. Verfahren nach Anspruch 1, **dadurch gekennzeichnet, dass** der protonenleitende Elektrolyt ein Gemisch aus einer mineralischen oder organischen Brønsted-Säure und einem Benzimidazolhydrogensulfatsalz ist, das durch Festphasensynthese mit direkter Neutralisation von Benzimidazol mit konzentrierter Schwefelsäure erhalten wird.

6. Verfahren nach Anspruch 1 oder 2, **dadurch gekennzeichnet, dass** der protonenleitende Elektrolyt eines der folgenden umfasst: reine Methansulfonsäure, Trifluoressigsäure oder deren Gemische mit Orthophosphorsäure.

7. Verfahren nach dem vorhergehenden Anspruch, **dadurch gekennzeichnet, dass** der protonenleitende Elektrolyt ein Gemisch aus konzentrierter Schwefelsäure und reiner Methansulfonsäure ist, wobei gleichzeitig mit c) ein Prozess der in-situ-Sulfonierung der Polybenzimidazol-Polymermatrix stattfindet.

8. Verfahren nach den vorhergehenden Ansprüchen, **dadurch gekennzeichnet, dass** der protonenleitende Elektrolyt ferner eine Lewis-Säure wie Phosphorpentoxid umfasst.

9. Verfahren nach dem vorhergehenden Anspruch, **dadurch gekennzeichnet, dass** der protonenleitende Elektrolyt ein Gemisch aus Methansulfonsäure, Phosphorpentoxid und Benzimidazol ist, wobei c) durch eine Polykondensationssynthese von Polybenzimidazol vorausgeht.

10. Verfahren nach den vorhergehenden Ansprüchen, **dadurch gekennzeichnet, dass** die dichten trockenen Filme und porösen Membranen von Benzimidazolen und deren Verbundstoffen anorganische Füllstoffe umfassen, ausgewählt aus der Gruppe bestehend aus Montmorillonit, Siliciumdioxid, Aktivkohle, Graphenoxid und Kohlenstoffnanoröhren.

## Revendications

1. Procédé de dopage efficace de films secs denses et de membranes poreuses à base de polybenzimidazoles et de leurs composites avec un électrolyte conducteur de protons, **caractérisé en ce qu'**il comprend :
a) l'obtention d'un électrolyte conducteur de protons, constituant un électrolyte mixte d'un acide de Bronsted minéral ou organique concentré par dissolution directe d'un composé hétérocyclique aromatique du groupe des benzimidazoles ou de ses dérivés dans une plage de concentration de 0,3 à 35 % en poids, au cours de laquelle se produit une réaction acide-base avec formation in situ d'un sel de benzimidazole correspondant, ou par dissolution d'un sel de benzimidazole de l'acide dopant correspondant synthétisé ex situ ;
b) la mise à disposition d'un film sec dense, d'une membrane poreuse ou d'un composite de ceux-ci à base d'une matrice de polybenzimidazole ;
c) l'immersion et le gonflement d'un film à base de polybenzimidazole, d'une membrane poreuse ou d'un composite de ceux-ci selon b) dans un bain contenant l'électrolyte mixte acide-sel selon a), dans une plage de température de 20 à 120 °C, pendant un temps de séjour d'au moins 3 minutes à un jour, au cours duquel se produit le dopage du matériau et l'obtention d'une membrane de polybenzimidazole conductrice de protons et solvatant les ions ; et
d) le conditionnement de membranes de polybenzimidazole dopées par électrolyte mixte, au cours duquel se produit une absorption d'humidité à l'équilibre.

2. Procédé selon la revendication 1, **caractérisé en ce que** le benzimidazole est le 1H-1,3-benzimidazole ou le 1-méthylbenzimidazole.

3. Procédé selon la revendication 1 ou 2, **caractérisé en ce que** l'électrolyte conducteur de protons comprend l'un des éléments suivants : acide sulfurique concentré, mélange d'acide sulfurique concentré et d'acide orthophosphorique.

4. Procédé selon la revendication précédente, **caractérisé en ce que**, simultanément à c), se produit un procédé de sulfonation in situ de la matrice polymère de polybenzimidazole.

5. Procédé selon la revendication 1, **caractérisé en ce que** l'électrolyte conducteur de protons est un mélange d'un acide de Bronsted minéral ou organique et d'un sel d'hydrogénosulfate de benzimidazole obtenu par synthèse en phase solide avec neutralisation directe du benzimidazole par de l'acide sulfurique concentré.

6. Procédé selon la revendication 1 ou 2, **caractérisé en ce que** l'électrolyte conducteur de protons comprend l'un des éléments suivants : acide méthanesulfonique pur, acide trifluoroacétique ou leurs mélanges avec l'acide orthophosphorique.

7. Procédé selon la revendication précédente, **caractérisé en ce que** l'électrolyte conducteur de protons est un mélange d'acide sulfurique concentré et d'acide méthanesulfonique pur, dans lequel un procédé de sulfonation in situ de la matrice polymère de polybenzimidazole se produit simultanément avec c).

8. Procédé selon les revendications précédentes, **caractérisé en ce que** l'électrolyte conducteur de protons comprend en outre un acide de Lewis tel que le pentoxyde de phosphore.

9. Procédé selon la revendication précédente, **caractérisé en ce que** l'électrolyte conducteur de protons est un mélange d'acide méthanesulfonique, de pentoxyde de phosphore et de benzimidazole, dans lequel c) est précédé par une synthèse de polycondensation du polybenzimidazole.

10. Procédé selon les revendications précédentes, **caractérisé en ce que** les films secs denses et les membranes poreuses de benzimidazoles et leurs composites comprennent des charges inorganiques sélectionnées dans le groupe constitué de montmorillonite, silice, charbon actif, oxyde de graphène, nanotubes de carbone.
